# NEUE EUROPÄISCHE PATENTSCHRIFT

(11) **EP 1 745 858 B2**
(45) Veröffentlichungstag und Bekanntmachung des Hinweises auf die Entscheidung über den Einspruch: **02.01.2019**
(45) Hinweis auf die Patenterteilung: 05.10.2011
(21) Anmeldenummer: 06011635.7
(22) Anmeldetag: 06.06.2006
(51) Int. Cl.: B05B 13/02, B05B 13/04, B25J 9/00, B25J 21/00

(54) **Beschichtungsverfahren und zugehörige Beschichtungseinrichtung**
Coating process and corresponding apparatus
Procédé de revêtement et dispositif correspondant

(30) Priorität: 20.07.2005 DE 102005033972
(43) Veröffentlichungstag der Anmeldung: 24.01.2007
(73) Patentinhaber: Dürr Systems AG, 74321 Bietigheim-Bissingen (DE)
(72) Erfinder: Laufer, Rainer, 74395 Mundelsheim (DE); Herre, Frank, 71739 Oberriexingen (DE)
(74) Vertreter: Beier, Ralph

(56) Entgegenhaltungen:
- EP-B1- 1 187 700
- EP-B1- 1 827 769
- WO-A1-2006/053672
- DE-A1- 2 807 358
- DE-A1- 3 434 334
- DE-A1- 10 010 615
- DE-A1- 10 231 503
- DE-A1- 10 233 006
- DE-A1- 10 248 217
- DE-A1- 19 704 829
- DE-A1- 19 804 202
- DE-T2- 68 909 457
- US-A- 5 674 570
- US-A1- 2004 047 995
- US-B1- 6 197 115

## Beschreibung

Die Erfindung betrifft ein Verfahren zur Beschichtung von Werkstücken, nämlich zur Lackierung von Fahrzeugkarossen und/oder deren Anbauteilen, sowie eine entsprechende Beschichtungseinrichtung gemäß den nebengeordneten Ansprüchen.

Herkömmliche Lackieranlagen zur Lackierung von Kraftfahrzeugkarosserien weisen in der Regel eine Lackierstraße mit mehreren räumlich getrennten und hintereinander angeordneten Lackierkabinen auf, in denen auf die Kraftfahrzeugkarosserie die einzelnen Lackschichten aufgetragen werden, wie beispielsweise der Kathodentauchlack (KTL), der Füller, der Basislack und schließlich der Klarlack. Die Kraftfahrzeugkarosserie wird hierbei auf einer Transportschiene entlang der Lakkierstraße im Stop-and-Go-Betrieb (Taktbetrieb) oder im kontinuierlichen Förderbetrieb (V_{Förderer} = const.), auch Durchlaufbetrieb genannt, von Lackierkabine zu Lackierkabine transportiert.

Im Taktbetrieb ist bei der Aufbringung der einzelnen Lackschichten in den jeweiligen Lackierkabinen die Kraftfahrzeugkarosserie nach dem Einfördern räumlich fixiert, während das jeweilige Applikationsgerät, wie beispielsweise ein Rotationszerstäuber, die Lackierbewegungen ausführt und damit die gesamte Oberfläche der Kraftfahrzeugkarosserie von dem Applikationsgerät beschichtet wird. Bei der Lackierung steht die Kraftfahrzeugkarosserie also still, während das Applikationsgerät bewegt wird.

Die Anbauteile für Kraftfahrzeuge werden in der Regel auf einem Warenträger befestigt und mit einer Fördereinrichtung im Stop-and-Go- oder Durchlaufbetrieb vor dem zugehörigen Applikationsgerät positioniert bzw. vorbei gefördert, wobei dann das Applikationsgerät eine Lackierbewegung ausführt, damit die gesamte Oberfläche des jeweiligen Anbauteils lackiert wird. Auch hierbei ist das zu lackierende Anbauteil also während des Lakkiervorgangs räumlich fixiert bzw. bewegt sich kontinuierlich, während das Applikationsgerät bewegt wird. Anbauteile werden in der Regel im Durchlaufbetrieb lackiert und nicht im Taktbetrieb (fast zu 100%).

Der vorstehend beschriebene Stand der Technik weist vielfältige Nachteile auf, die im Folgenden kurz beschrieben werden.

Ein Nachteil besteht darin, dass durch die hohe Bewegungsgeschwindigkeit des Applikationsgeräts während des Lackiervorgangs Auftrags-Wirkungsgrad-Verluste entstehen, die zum einen durch die bewegungsbedingte Sprühstrahlverformung verursacht werden und zum anderen aus dem hohen Anteil vertikaler Lackierumfänge resultieren.

Ein weiterer Nachteil der bekannten Lackiereinlagen besteht darin, dass in den einzelnen Lackierkabinen jeweils in einem großen räumlichen Bereich optimale Strömungsverhältnisse erforderlich sind (einer der Gründe ist Durchlaufbetrieb), um ein gutes Lackierergebnis zu erreichen.

Darüber hinaus muss die Lackierkabine bei den bekannten Lackieranlagen sehr groß sein, um eine Verschmutzung der Kabineninnenwände durch den sogenannten Overspray zu vermeiden. Ein weiterer Nachteil ist der begrenzt vorhandene Raum im Lackierroboter. Diese Beschränkung entsteht selbst in relativ kurzer Zeit nach einer Neuentwicklung eines Roboters aufgrund der sich stetig verändernden Kundenanforderungen und Applikationstechnik. Der verfügbare Installationsraum ist also immer zu klein.

Die durch den Applikationsroboter hindurch verlegten Schläuche zur Versorgung des Applikationsgeräts sind aufgrund der hochdynamischen Bewegung des Applikationsroboters auch großen mechanischen Belastungen ausgesetzt, was die Lebensdauer dieser Schläuche verringert und die Instandhaltungskosten erhöht.

Ferner sind bei den eingangs beschriebenen Applikationsrobotern auch relativ große Schlauchlängen und -querschnitte erforderlich, was zu großen Farb- und Spülverlusten führt.

Darüber hinaus ist die Schlauchführung durch den Applikationsroboter konstruktiv aufwendig, was die Herstellungskosten derartiger Applikationsroboter erhöht.

Außerdem weisen derartige Applikationsroboter auch eine erhebliche Baugröße auf, da die Applikationstechnik zur Verfolgung des Ziels der optimalen Lakkierung komplett in dem Applikationsroboter angebracht werden muss.

Insgesamt führt dies zu einer teuren Roboter- und Applikationstechnik, wodurch die Investitionskosten für den Kunden erhöht sind.

Bei der eingangs beschriebenen herkömmlichen Lackierung von Anbauteilen für Kraftfahrzeuge besteht darüber hinaus das Problem, dass aus Kapazitätsgründen meist mehrere Anbauteile auf einem gemeinsamen Warenträger montiert sind. Dies kann bei einer Lakkierung zu einer gegenseitigen Beeinflussung der einzelnen Anbauteile führen, was die Beschichtungsqualität verschlechtert. Darüber hinaus sind die Lackierverhältnisse innerhalb der Lackierkabine dann nicht an allen Werkstücken gleich. In der Regel sind deshalb relativ aufwendige Gehängekonstruktionen als Warenträger erforderlich, was die Kosten zusätzlich erhöht. Ferner sind hierbei aufwendige Untersuchungen der Erreichbarkeit der einzelnen Werkstücke und der Taktzeiten notwendig, um ein befriedigendes Lackierergebnis zu erreichen.

Aus DE 102 31 503 A1 ist es bekannt, dass in einer Beschichtungskabine Roboter die Applikationseinrichtungen führen. Es ist aus dieser Druckschrift jedoch nicht bekannt, dass die zu beschichtenden Gegenstände von Robotern geführt werden.

Die Druckschrift DE 198 04 202 A1 sieht vor, dass mehrere Roboter die zu beschichtenden Gegenstände aufnehmen und diese durch einen Raum und durch ein Tauchbad führen.

Ferner ist es aus EP 0 844 103 A1 bekannt, dass mehrere Roboter die zu beschichtenden Gegenstände aufnehmen und durch ein Tauchbad führen.

Schließlich ist es aus DE 197 26 349 A1 bekannt, dass ein Band die zu beschichtenden Gegenstände durch eine Lackierkabine fördert, wobei die auftragenden Sprühorgane an Robotern angebracht sind.

Aus US 2004/0047995 A1 und US 6 197 115 B1 sind Vorrichtungen zur Applikation eines Klebstoffs bzw. eines Dichtungsmittels bekannt. Diese Druckschriften offenbaren jedoch weder eine Zerstäubung von Lack noch die Beschichtung von Kraftfahrzeugkarosserien.

Schließlich offenbart DE 34 34 334 A1 eine Vorrichtung und ein Verfahren zum Aufbringen von Suspensionen einbrennfähiger Feststoffe auf Keramik- oder Glassubstrate. Auch diese Druckschrift entstammt also nicht dem Gebiet der Lackiertechnik.

Der Erfindung liegt deshalb die Aufgabe zugrunde, die eingangs beschriebene bekannte Beschichtungseinrichtung zu verbessern und einen oder mehrere der vorstehend aufgeführten Nachteile zu vermeiden. Darüber hinaus liegt der Erfindung die Aufgabe zugrunde, ein entsprechendes Beschichtungsverfahren anzugeben.

Diese Aufgabe wird durch ein Beschichtungsverfahren und eine entsprechende Beschichtungseinrichtung gemäß den nebengeordneten Ansprüchen gelöst.

Die Erfindung umfasst die allgemeine technische Lehre, bei einem Beschichtungsvorgang die zu beschichtenden Werkstücke jeweils in die geeignete Beschichtungsposition zu bewegen, wobei die Positionierung der einzelnen Werkstücke vorzugsweise durch einen Handhabungsroboter erfolgt. Hierbei können die zu beschichtenden Werkstücke auch während der Beschichtung bewegt werden, wohingegen die zu beschichtenden Werkstücke bei den eingangs beschriebenen herkömmlichen Lackieranlagen während der Beschichtung räumlich fixiert oder mit Fördergeschwindigkeit bewegt werden. Die Beschichtungsposition, in die die Werkstücke bei der hier beschriebenen Erfindung von dem Handhabungsgerät gebracht werden, ist also stets oder jedenfalls in der Regel variabel.

Der Handhabungsroboter ist ein mehrachsiger Roboter.

Vorzugsweise werden die zu beschichtenden Werkstücke jeweils von einem einzigen Handhabungsroboter bewegt, jedoch besteht auch die Möglichkeit, dass die zu beschichtenden Werkstücke jeweils von mehreren Handhabungsrobotern gemeinsam bewegt werden, was insbesondere bei großen und schweren Werkstücken sinnvoll ist. Die Handhabungsroboter müssen hinsichtlich des Einsatzes im direkten Lackierbereich in der Lackierkabine geeignet sein, d.h. über z.B. den notwendigen Explosionsschutz und die Reinigungsfreundlichkeit verfügen.

Erfindungsgemäß können nicht nur Werkstükke oder Anbauteile z.B. von Fahrzeugkarossen beschichtet werden, sondern auch die Karossen selbst oder andere schwere Werkstücke. Da der Handhabungsroboter ein möglichst gutes (kleines) Verhältnis aus eigener Masse zu der zu handhabenden Masse haben soll, kann insbesondere in solchen Fällen als Handhabungsroboter anstelle herkömmlicher Roboter mit serieller Kinematik ein Roboter mit einer Parallelkinematik zu bevorzugen sein, wie er z.B. in der Patentanmeldung EP 05106073.9 (entsprechend DE 10 2004 033 329) beschrieben ist, mit der Maßgabe, dass die hieraus oder anderweitig bekannte Parallelkinematik zur mechanischen Führung der Werkstücke dient.

Insbesondere bei kleineren Werkstücken nimmt der Handhabungsroboter vorzugsweise mehrere Werkstücke gemeinsam auf und bewegt diese in die jeweilige Beschichtungsposition. Dies ist vorteilhalft, da durch die gemeinsame Aufnahme und Bewegung von mehreren Werkstücken die Lackierkapazität erhöht werden kann.

Zur gemeinsamen Aufnahme und Halterung mehrerer Werkstücke ist vorzugsweise eine Halteeinrichtung vorgesehen, welche die einzelnen Werkstücke aufnimmt und während des Lackiervorgangs fixiert. Beispielsweise kann eine solche Haltevorrichtung zur Halterung der zu beschichtenden Werkstücke Haken, Ösen, Greifer, Saugnäpfe, Magneten und/oder Klemm-Spreiz-Vorrichtungen aufweisen. Bei einer elektrostatischen Beschichtung mit einem elektrisch aufgeladenen Beschichtungsmittel ist es vorteilhaft, wenn die Halteeinrichtung die gehaltenen Werkstücke elektrisch erdet, damit das elektrostatisch aufgeladene Beschichtungsmittel mit möglichst hohem Wirkungsgrad auf die Werkstücke appliziert werden kann. Die Halteeinrichtung kann deshalb aus einem elektrisch leitfähigen Material bestehen oder eine separate elektrische Erdung aufweisen.

In einer Variante der Erfindung ist das Applikationsgerät ortsfest angeordnet, so dass die Relativbewegung zwischen dem Applikationsgerät und den zu beschichtenden Werkstücken ausschließlich von dem Handhabungsroboter ausgeführt wird, der die Werkstükke hält.

Es ist jedoch alternativ auch möglich, dass auch das Applikationsgerät räumlich beweglich geführt wird, so dass die Relativbewegung zwischen dem Applikationsgerät und den zu beschichtenden Werkstücken sowohl durch die Bewegung des Applikationsgeräts als auch durch die Bewegung des Handhabungsroboters entsteht. Beispielsweise kann das Applikationsgerät hierzu an einem mehrachsigen Applikationsroboter, einer Handachse, einer Parallelkinematik oder einer Hubmaschine oder einer Kombination aus vorgenannten Kinematiken montiert sein. Es ist ferner auch möglich, dass das Applikationsgerät von einem Applikationsroboter geführt wird, der in allen drei Raumrichtungen Linearachsen aufweist.

Das Applikationsgerät kann in einer Lackierkabine beispielsweise an der Decke oder an der Wand der Lackierkabine angeordnet sein, wobei eine hängende Montage des Applikationsgerätes an der Decke der Lakkierkabine strömungstechnisch günstig ist, da die Lakkierkabine in der Regel von oben von einem Frischluftstrom durchströmt wird.

Weiterhin besteht im Rahmen der Erfindung die Möglichkeit, dass die Werkstücke von mehreren Applikationsgeräten beschichtet werden, die zur Erhöhung der Flächenleistung gleichzeitig betrieben werden können.

Bei mehreren Applikationsgeräten besteht alternativ auch die Möglichkeit, dass der Handhabungsroboter die zu beschichtenden Werkstücke nacheinander in eine geeignete Beschichtungsposition relativ zu den einzelnen Applikationsgeräten bringt, so dass die Applikationsgeräte sequenziell arbeiten.

Die Anordnung mehrerer Applikationsgeräte bietet auch den Vorteil, dass die einzelnen Applikationsgeräte das Beschichtungsmittel im sogenannten A/B-Betrieb abwechselnd applizieren können, wobei das eine Applikationsgerät das Beschichtungsmittel appliziert (A-Betriebsphase), während das andere Applikationsgerät einen Farbwechsel durchführt (B-Betriebsphase). Dies ermöglicht auch bei einem Farbwechsel einen unterbrechungsfreien Beschichtungsbetrieb.

Die einzelnen Applikationsgeräte können hierbei unterschiedliche Beschichtungsmittel applizieren. Beispielsweise kann das eine Applikationsgerät einen Basislack (Base Coat) auftragen, wohingegen das andere Applikationsgerät einen Klarlack (Clear Coat) auf das jeweilige Werkstück aufträgt.

Die einzelnen Applikationsgeräte können sich jedoch auch durch einen unterschiedlichen konstruktiven Aufbau unterscheiden. Beispielsweise kann es sich bei dem einen Applikationsgerät um einen Rotationszerstäuber handeln, wohingegen das andere Applikationsgerät als Luftzerstäuber ausgeführt ist. Allgemeiner gesagt können im Rahmen der Erfindung als Applikationsgerät alle an sich bekannten Applikatoren verwendet werden, wie z.B. Zerstäuber, Luftzerstäuber, Hochrotationszerstäuber, Glockenzerstäuber, Scheibenzerstäuber sowie Airless-, Airmix- und Ultraschallgeräte jeweils mit und ohne Hochspannung.

Ferner besteht im Rahmen der Erfindung die Möglichkeit, dass in einer Lackierkabine mehrere oder sogar alle Lackschichten auf die einzelnen Werkstücke aufgetragen werden. Hierbei können die einzelnen Lackschichten sequenziell (z.B. nass in nass) oder parallel aufgetragen werden.

Vorzugsweise sind jedoch mehrere, räumlich getrennte Lackierkabinen vorgesehen, wobei die Möglichkeit besteht, dass ein Handhabungsroboter mehrere Lackierkabinen mit den zu beschichtenden Werkstücken beschickt. Die einzelnen Lackierkabinen können hierbei ring- oder sternförmig um den Handhabungsroboter herum angeordnet sein, was den Zugriff des Handhabungsroboters auf die einzelnen Lackierkabinen erleichtert.

Darüber hinaus besteht im Rahmen der Erfindung die Möglichkeit, dass in einer Lackierkabine mindestens zwei Handhabungsroboter angeordnet sind, wobei der eine Handhabungsroboter ein Werkstück in der Beschichtungsposition relativ zu dem jeweiligen Applikationsgerät hält, während der andere ein anderes Werkstück aufnimmt oder ablegt. Auf diese Weise kann die Flächenleistung bei der Beschichtung optimiert werden, da die Beschichtung während der Aufnahme und der Ablage der Werkstücke nicht unterbrochen werden muss.

Darüber hinaus kann die erfindungsgemäße Beschichtungseinrichtung so ausgeführt sein, dass die Werkstücke vor einer Lackierkabine aufgestaut werden, so dass für den Handhabungsroboter immer Werkstücke zur Verfügung stehen und somit keine Wartezeiten auftreten. Die nachfolgenden Prozessschritte der Beschichtungseinrichtung sind dann vorzugsweise so ausgeführt, dass es am Ausgang der Lackierkabine zu keinem Aufstauen und dadurch zu keinen Zeitverlusten in der Lakkierkabine kommt. Dies bedeutet, dass die Zuführung der zu beschichtenden Werkstücke zu einer Lackierkabine mit einer ersten Taktzeit erfolgt, während die Beschichtung der Werkstücke in der Lackierkabine mit einer zweiten Taktzeit durchgeführt wird, wohingegen der Weitertransport der Werkstücke aus der Lackierkabine und deren Weiterbearbeitung in einer dritten Taktzeit erfolgt, wobei die erste Taktzeit und/oder die dritte Taktzeit kürzer sind als die zweite Taktzeit. Durch eine relativ kurze erste Taktzeit wird erreicht, dass an der Lackierkabine eingangsseitig immer genügend Werkstücke zur Verfügung stehen, so dass keine Wartezeiten bis zur Anlieferung neuer Werkstücke auftreten. Durch eine relativ kurze dritte Taktzeit wird dagegen erreicht, dass die beschichteten Werkstücke am Ausgang der Lackierkabine schnell abgenommen werden, so dass auch dort keine Wartezeiten auftreten.

Es wurde bereits eingangs erwähnt, dass in die Lackierkabine vorzugsweise ein Frischluftstrom eingeleitet wird, was an sich von herkömmlichen Lackieranlagen bekannt ist. Vorzugsweise führt der Handhabungsroboter die zu beschichtenden Werkstücke dann in Richtung des Frischluftstroms in die Lackierkabine ein, also in der Regel von oben. Dies ist vorteilhaft, da so beim Farbwechsel keine oder nur geringe Zeitverluste durch Leerfahren der Lackierkabine entstehen, um Spritznebel auf die nachfolgenden Werkstücke zu vermeiden. Das schnelle Ausfördern des lackierten Werkstücks aus der Lackierkabine und das schnelle Einfördern des nächsten Werkstücks in die Lackierkabine reduziert die Verlustzeit bei einem Farbwechsel auf die reine Farbwechselzeit der Applikationstechnik bzw. auf die Zeit für die Abfuhr von Farbnebel über die Luftsinkgeschwindigkeit.

Vorzugsweise fährt der Handhabungsroboter bei einem Farbwechsel deshalb auch entgegen dem Frischluftstrom in einen Frischluftbereich, um dort möglichst schnell wieder mit der Applikation einer neuen Farbe beginnen zu können. Bei der üblichen Zufuhr des Frischluftstroms von oben nach unten fährt der Handhabungsroboter bei einem Farbwechsel also innerhalb der Lackierkabine nach oben, da der Sprühnebel der zuvor verwendeten Farbe dort bereits weitgehend abgesunken ist, was zum einen durch den nach unten gerichteten Frischluftstrom und zum anderen durch die Schwerkraft bewirkt wird.

Für eine elektrostatische Beschichtungstechnik kann ein elektrisch isolierter Aufbau verwendet werden, bei dem Bauelemente im Roboterarm des Applikationsanbaus bzw. Applikationsroboters und Teile des Roboterarms unter Hochspannung stehen und dadurch den elektrostatisch aufgeladenen Farbnebel elektrostatisch abweisen. Der klassische Applikationsroboter kann also bei der Erfindung durch den Handhabungsroboter ersetzt werden. In einer besonderen Variante kann sich die resultierende Bewegung aber auch aus der des Handhabungsroboters und des bewegten Zerstäubers ergeben.

Die zu beschichtenden Werkstücke wie beispielsweise Anbauteile von Fahrzeugkarossen können schon bei ihrer Herstellung so geformt und ausgebildet sein, dass sie von dem Handhabungsgerät optimal erfasst werden können. Es kann sich dabei um speziell angeformte oder an ihnen angebrachte Halteelemente oder Bereiche handeln, an denen beispielsweise ein Greifer des Handhabungsgeräts zufassen kann.

In manchen Fällen wie beispielsweise bei der Beschichtung von Stoßstangen (Bumpers) von Fahrzeugkarossen ist es ferner möglich oder kann es wegen der ggf. schnellen Bewegung dieser Werkstücke notwendig sein, sie mit einer Versteifung zu versehen. Diese Versteifung kann dann als Halteelement für den Handhabungsroboter verwendet werden, wenn keine anderen Elemente des Werkstücks dafür zweckmäßiger sind. Insbesondere besteht die Möglichkeit, schon bei der Herstellung von Spritzguss- oder anderen Formteilen Verstrebungen anzugießen oder anzuformen, die vorzugsweise mittig mit einem Bolzen versehen sein können. Diese ggf. angegossenen Teile haben auch den Vorteil, dass sie eine spezielle Vorrichtung überflüssig machen, auf die die betreffenden Teile sonst aufgespannt werden müssen. Nach dem Fertigstellungsprozess (Lackieren, Polieren und ggf. Endmontage von elektrischen und sonstigen Einbauelementen wie Verkabelung, Beleuchtung, Antennen, Fensterheber, Spiegelverstellungselemente, Motoren usw.) können die angegossenen oder auf sonstige Weise angebrachten Zusatzelemente von dem Werkstück wieder abgetrennt werden. Diese z.B. angegossenen Transporthalterungen haben den weiteren Vorteil, dass sie das Entlacken von Gestellen und die Übergabe an andere Transporthalterungen z.B. für die Montage überflüssig machen.

Die erfindungsgemäß zu beschichtenden Werkstücke können aus beliebigen unterschiedlichen Werkstoffen bestehen wie Kunststoff, Stahl, Aluminium usw. Werkstücke von Fahrzeugkarossen wie Türen, Kotflügel, Dächer, Heckklappen, Motorhauben usw. können extern bzw. von den sonstigen Karossenteilen entfernt lackiert werden.

Andere vorteilhafte Weiterbildungen der Erfindung sind in den Unteransprüchen gekennzeichnet oder werden nachstehend zusammen mit der Beschreibung der bevorzugten Ausführungsbeispiele anhand der Figuren näher erläutert. Es zeigen:
- Figur 1: eine vereinfachte, schematisierte Darstellung ei- ner Lackierkabine mit einem Handhabungsroboter zur Positionierung der zu beschichtenden Werkstü- cke und einem Rotationszerstäuber, der an der De- cke der Lakkierkabine fest montiert ist,
- Figur 2: eine ähnliche Lackierkabine, bei der der Rotati- onszerstäuber jedoch an der Decke der Lackierka- bine mittels einer mehrachsigen Handachse beweg- lich angebracht ist,
- Figur 3: ein weiteres ähnliches Ausführungsbeispiel einer derartigen Lackierkabine, bei der der Rotations- zerstäuber mittels einer Parallelkinematik an der Decke der Lakkierkabine befestigt ist,
- Figur 4: ein weiteres Ausführungsbeispiel einer erfindungsgemäßen Lackierkabine, bei der der Handha- bungsroboter auf einer Schiene verschiebbar ist, während an der Decke der Lakkierkabine sowohl ein Rotationszerstäuber als auch ein Luftzerstäuber angebracht ist,
- Figur 5: ein alternatives Ausführungsbeispiel einer erfin- dungsgemäßen Lackierkabine mit einem Handhabungs- roboter zur Positionierung der zu beschichtenden Werkstücke und einem Applikationsroboter zur hochbeweglichen Führung des Rotationszerstäubers innerhalb der Lackierkabine,
- Figur 6: eine schematisierte Aufsichtsdarstellung der La- ckierkabine aus Figur 5,
- Figur 7: eine erfindungsgemäße Lackieranlage mit einem Handhabungsroboter zur Positionierung der zu be- schichtenden Werkstücke in drei sternförmig um den Handhabungsroboter angeordneten Lackierkabi- nen sowie
- Figur 8: eine schematisierte Seitenansicht einer erfindungsgemäßen Lackierkabine mit einer Seitenwand- montage des Rotationszerstäubers.

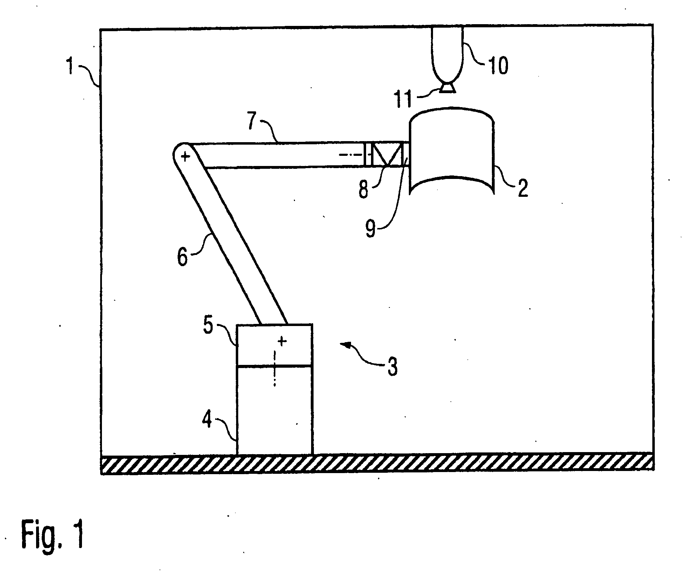

Die vereinfachte Querschnittsdarstellung in Figur 1 zeigt eine Lackierkabine 1, in der ein Werkstück 2 lackiert werden kann, wobei es sich bei dem Werkstück 2 beispielsweise um ein Anbauteil für ein Kraftfahrzeug handeln kann.

Die Positionierung des Werkstücks 2 innerhalb der Lackierkabine 1 erfolgt durch einen mehrachsigen Handhabungsroboter 3, der weitgehend herkömmlich aufgebaut sein kann und deshalb im Folgenden nur kurz beschrieben wird. Der Handhabungsroboter 3 ist mittels eines feststehenden Basisteils 4 am Boden der Lackierkabine 1 bzw. an deren Fundament befestigt und weist ein drehbares Karussell 5 auf, das um eine gestrichelt dargestellte Drehachse relativ zu dem Basisteil 4 drehbar ist. Das Karussell 5 trägt einen schwenkbaren Roboterarm 6, an dessen distalem Ende ein weiterer schwenkbarer Roboterarm 7 angebracht ist. Der Roboterarm 7 trägt an seinem distalen Ende wiederum eine mehrachsige Roboterhandachse 8, die einen Magnetgreifer 9 führt, der das zu beschichtende Werkstück 2 magnetisch hält. Anstelle des Magnetgreifers 9 können jedoch an der Roboterhandachse auch andere Greifer montiert werden, wie beispielsweise Saugnäpfe oder Klemm-Spreiz-Vorrichtungen.

Die Beschichtung des Werkstücks 2 erfolgt durch einen herkömmlichen Rotationszerstäuber 10 mit einem schnell drehenden Glockenteller 11, wobei der Rotationszerstäuber 10 an der Decke der Lackierkabine 1 hängend montiert ist und in diesem Ausführungsbeispiel keine Bewegungsfreiheit aufweist.

Während des Beschichtungsvorgangs wird ein Frischluftstrom von oben durch die Decke der Lackierkabine 1 in die Lackierkabine 1 eingeleitet, was an sich ebenfalls bekannt ist. Die hängende Montage des Rotationszerstäubers 10 an der Decke der Lackierkabine 1 bietet deshalb den Vorteil, dass die Applikation des Beschichtungsmittels durch den Rotationszerstäuber 10 von dem vertikalen Frischluftstrom nicht behindert wird. Darüber hinaus bietet die Montage des Rotationszerstäubers 10 an der Decke der Lackierkabine 1 den Vorteil, dass die Farbwechselzeit relativ gering ist, da das Beschichtungsmittel in der Lackierkabine 1 nach unten appliziert wird und die Abfuhr des alten Beschichtungsmittels beim Farbwechsel ebenfalls in Richtung des Frischluftstroms nach unten erfolgt. Der in der Lackierkabine 1 verteilte Sprühnebel sinkt nämlich aufgrund des nach unten gerichteten Frischluftstroms und wegen der ebenfalls nach unten gerichteten Schwerkraft abwärts, was bei einem Farbwechsel zu einer relativ schnellen Entleerung der Lackierkabine 1 führt und damit einen schnellen Farbwechsel erlaubt.

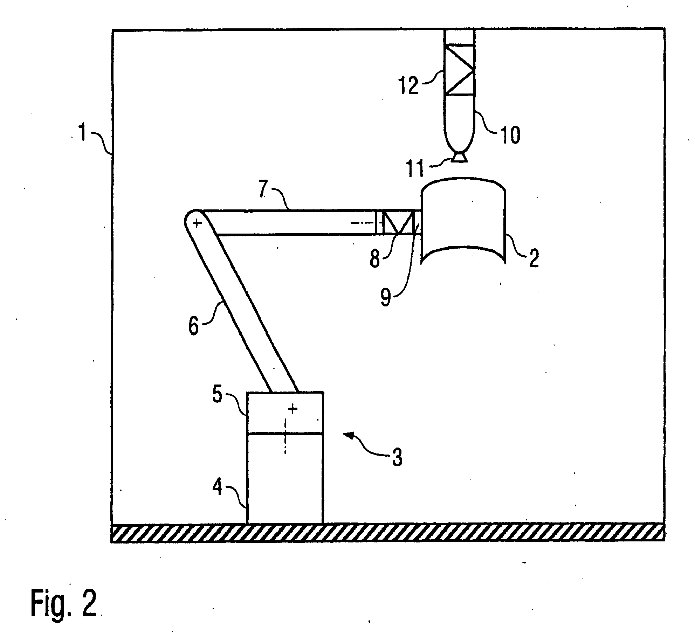

Das in Figur2 dargestellte Ausführungsbeispiel einer erfindungsgemäßen Lackierkabine stimmt weitgehend mit dem vorstehend beschriebenen und in Figur 1 dargestellten Ausführungsbeispiel überein, so dass zur Vermeidung von Wiederholungen auf die vorstehende Beschreibung verwiesen wird, wobei für entsprechende Werkstücke dieselben Bezugszeichen verwendet werden.

Eine Besonderheit dieses Ausführungsbeispiels besteht darin, dass der Rotationszerstäuber 10 an der Decke der Lackierkabine 1 mittels einer mehrachsigen Handachse 12 hochbeweglich montiert ist. In diesem Ausführungsbeispiel kann also sowohl das zu beschichtende Werkstück 2 als auch der Rotationszerstäuber 10 bewegt werden, um einen möglichst schnellen Lackiervorgang zu ermöglichen.

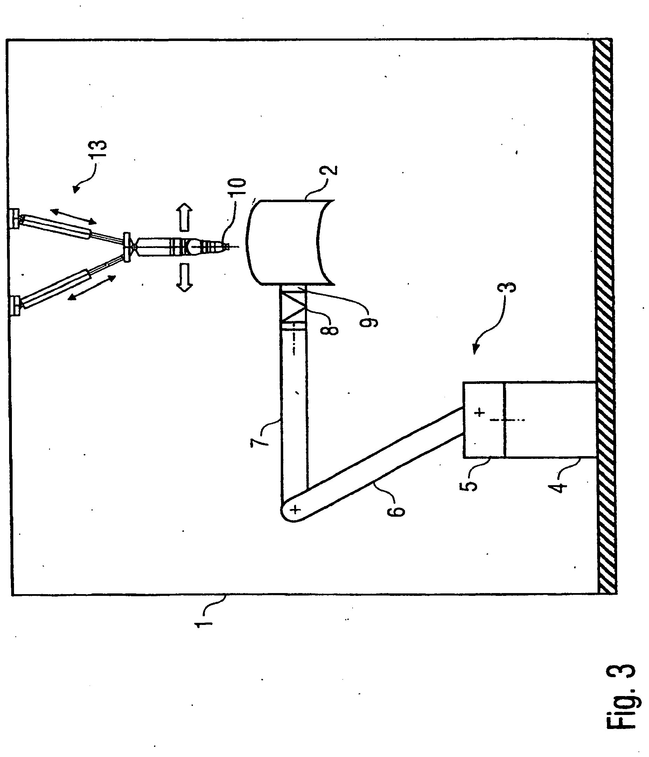

Ein weiteres ähnliches Ausführungsbeispiel ist in Figur3 gezeigt, das ebenfalls weitgehend mit den vorstehend beschriebenen Ausführungsbeispielen übereinstimmt, so dass zur Vermeidung von Wiederholungen weitgehend auf die vorstehende Beschreibung verwiesen wird, wobei für entsprechende Werkstücke dieselben Bezugszeichen verwendet werden.

Eine Besonderheit dieses Ausführungsbeispiels besteht darin, dass der Rotationszerstäuber 10 mittels einer Parallelkinematik 13 beweglich an der Dekke der Lackierkabine 1 montiert ist. Der Aufbau und die Funktionsweise der Parallelkinematik 13 ist beispielsweise in den eingangs erwähnten Patentanmeldungen EP 0510073.9 oder DE 10 2004 033 329.7 beschrieben. Der Inhalt dieser Patentanmeldungen ist deshalb hinsichtlich des Aufbaus und der Funktionsweise der Parallelkinematik 13 der vorliegenden Beschreibung in vollem Umfang zuzurechnen, so dass an dieser Stelle auf eine detaillierte Beschreibung der Parallelkinematik 13 verzichtet werden kann.

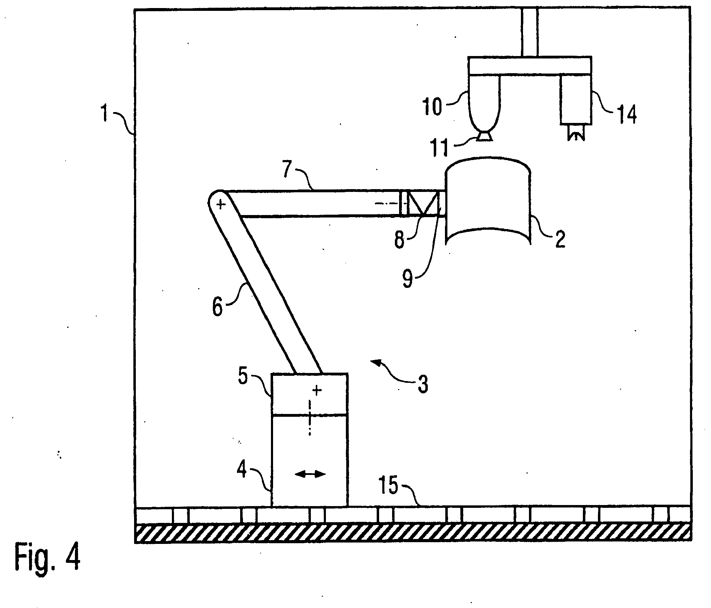

Figur 4 zeigt wiederum ein Ausführungsbeispiel einer Lackierkabine 1, das teilweise mit den vorstehend beschriebenen Ausführungsbeispielen übereinstimmt, so dass zur Vermeidung von Wiederholungen auf die vorstehende Beschreibung verwiesen wird, wobei für entsprechende Werkstücke im Folgenden dieselben Bezugszeichen verwendet werden.

Eine Besonderheit dieses Ausführungsbeispiels besteht darin, dass an der Decke der Lackierkabine 1 nicht nur der Rotationszerstäuber 10 angebracht ist, sondern auch ein zusätzlicher Luftzerstäuber 14. Anstelle des Luftzerstäubers 14 kann jedoch auch ein zusätzlicher Rotationszerstäuber montiert werden, so dass in der Lackierkabine 1 zwei Rotationszerstäuber angeordnet sind.

Der Rotationszerstäuber 10 und der Luftzerstäuber 14 können hierbei zeitlich nacheinander betrieben werden, um unterschiedliche Beschichtungsmittel (z.B. Erstauftrag/Zweitauftrag, Basislack/Klarlack) zu applizieren. Der Handhabungsroboter 3 positioniert das zu beschichtende Werkstück 2 dann nacheinander jeweils in einer geeigneten Beschichtungsposition relativ zu dem Rotationszerstäuber 10 bzw. dem Luftzerstäuber 14.

Eine weitere Besonderheit dieses Ausführungsbeispiels besteht darin, dass der Handhabungsroboter 3 auf einer Schiene 15 in Pfeilrichtung verschiebbar ist.

Statt der hier beschriebenen Ausführungsbeispiele stehen dem Fachmann andere, prinzipiell aber ähnliche Möglichkeiten zur Verfügung wie insbesondere die Verwendung mehrerer Roboter und mehrerer Zerstäuber in einer oder mehreren Kabinen.

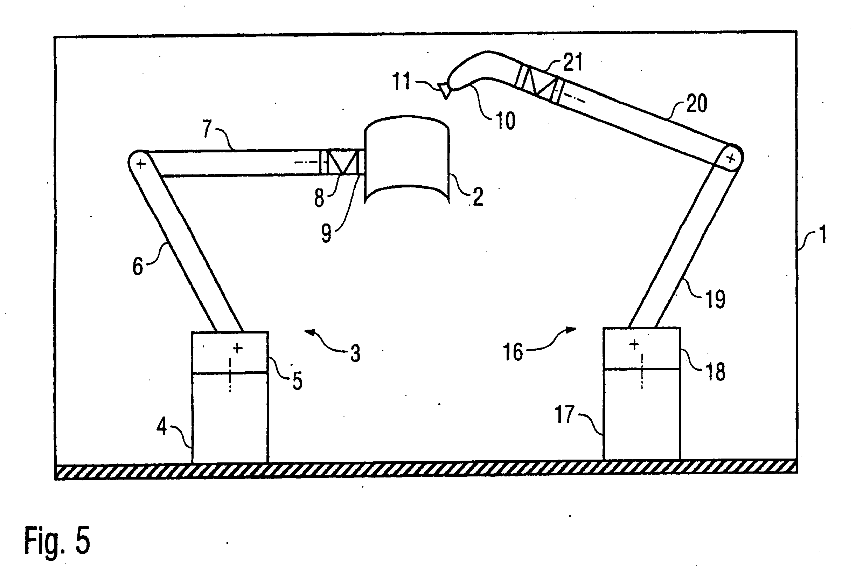

Figur 5 zeigt ein weiteres Ausführungsbeispiel einer erfindungsgemäßen Lackierkabine, das wiederum teilweise mit den vorstehend beschriebenen Ausführungsbeispielen übereinstimmt, so dass zur Vermeidung von Wiederholungen weitgehend auf die vorstehende Beschreibung verwiesen wird, wobei für entsprechende Werkstücke dieselben Bezugszeichen verwendet werden.

Eine Besonderheit dieses Ausführungsbeispiels besteht darin, dass der Rotationszerstäuber 10 nicht an der Decke der Lackierkabine 1 montiert ist, sondern hochbeweglich von einem mehrachsigen Applikationsroboter 16 geführt wird. Der Applikationsroboter 16 ist ebenfalls weitgehend herkömmlich ausgeführt, so dass der Aufbau des Applikationsroboters 16 im folgenden nur kurz beschrieben wird.

Der Applikationsroboter 16 weist ein feststehendes Basisteil 17 auf, das am Boden der Lackierkabine 1 bzw. an deren Fundament befestigt ist. Auf dem Basisteil 17 ist ein Karussell 18 drehbar gelagert, wobei das Karussell 18 zwei schwenkbare Roboterarme 19, 20 trägt. An dem distalen Ende des Roboterarms 20 ist eine mehrachsige Roboterhandachse 21 angebracht, die den Rotationszerstäuber hochbeweglich führt. In diesem Ausführungsbeispiel kann also sowohl das zu beschichtende Werkstück 2 als auch der Rotationszerstäuber 10 hochbeweglich geführt werden.

Es kann zweckmäßig sein, den Handlingroboter an der Wand oder Decke der Lackierkabine zu montieren, um die Verschmutzung durch das Overspray zu verhindern oder zu minimieren. Andererseits besteht auch die Möglichkeit der Montage auf einem Halter oder Gestell im Innenraum der Kabine.

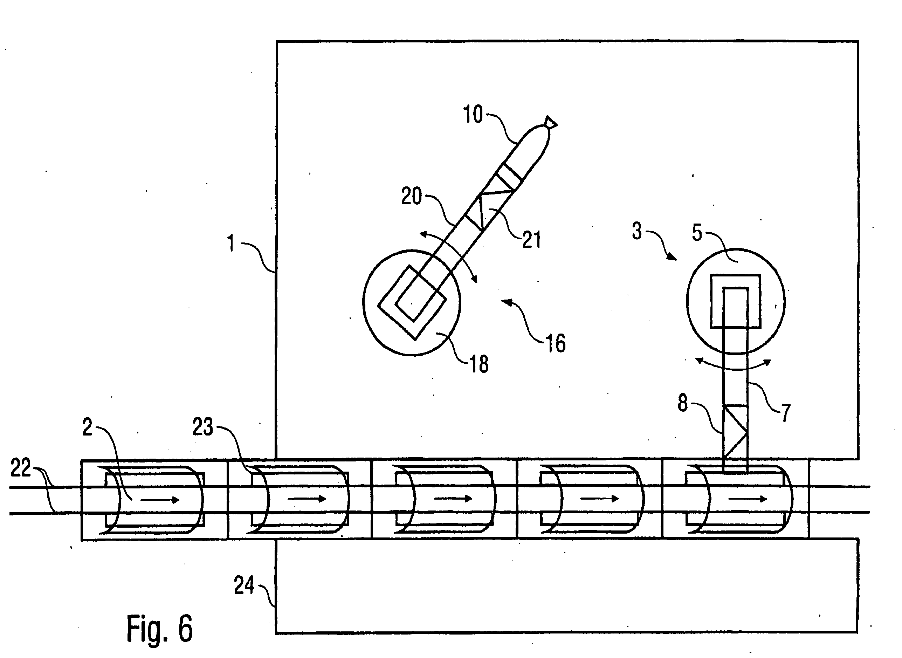

Figur 6 zeigt eine Aufsichtsdarstellung der Lakkierkabine 1 aus Figur 5, aus der auch die Zuführung der zu beschichtenden Werkstücke 2 in die Lackierkabine 1 hervorgeht. So verläuft durch die Lackierkabine 1 eine Transportschiene 22, auf der die Werkstücke 2 mittels einer verschiebbaren Halteeinrichtung 23 transportiert werden können.

Auf der der Lackierkabine 1 gegenüberliegenden Seite der Transportschiene 1 befindet sich hierbei eine Kontrollzone 24.

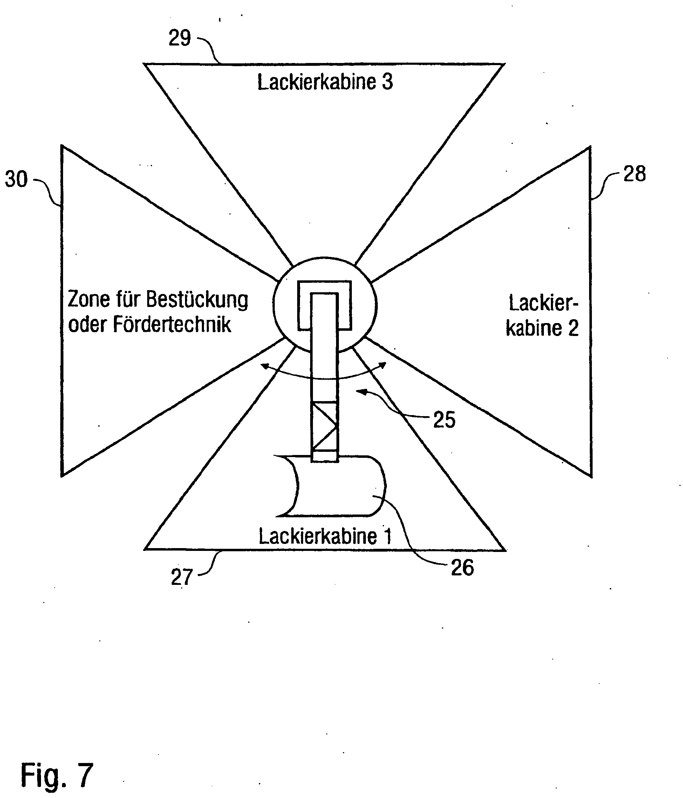

Figur 7 zeigt ferner eine Variante der Erfindung mit einem Handhabungsroboter 25 zur Positionierung eines zu beschichtenden Werkstücks 26 in mehreren räumlich getrennten Lackierkabinen 27, 28, 29, wobei die Lackierkabinen 27-29 sternförmig um den Handhabungsroboter 25 herum angeordnet sind. Der Handhabungsroboter 25 kann also alle Lackierkabinen 27-29 mit dem zu beschichtenden Werkstück 26 beschicken.

Darüber hinaus weist die Lackiereinrichtung in diesem Ausführungsbeispiel eine weitere Zone 30 für die Bestückung und die Fördertechnik auf.

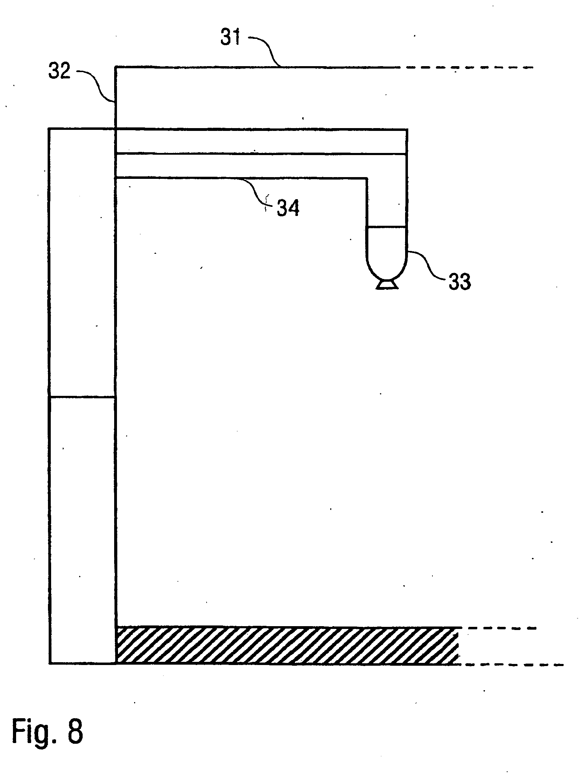

Schließlich zeigt Figur 8 eine vereinfachte Seitenansicht einer Lackierkabine 31, die eine Seitenwand 32 aufweist, in der ein Rotationszerstäuber 33 mittels eines Arms 34 montiert ist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 1: Lackierkabine
- 2: Bauteil
- 3: Handhabungsroboter
- 4: Basisteil
- 5: Karussell
- 6: Roboterarm
- 7: Roboterarm
- 8: Roboterhandachse
- 9: Magnetgreifer
- 10: Rotationszerstäuber
- 11: Glockenteller
- 12: Handachse
- 13: Parallelkinematik
- 14: Luftzerstäuber
- 15: Schiene
- 16: Applikationsroboter
- 17: Basisteil
- 18: Karussell
- 19: Roboterarm
- 20: Roboterarm
- 21: Roboterhandachse
- 22: Transportschiene
- 23: Halteeinrichtung
- 24: Kontrollzone
- 25: Handhabungsroboter
- 26: Bauteile
- 27-29: Lackierkabinen
- 30: Zone für Fördertechnik
- 31: Lackierkabine
- 32: Seitenwand
- 33: Rotationszerstäuber
- 34: Arm

## Patentansprüche

1. Verfahren zur Beschichtung von Werkstücken (2, 26), nämlich zur Lackierung von Fahrzeugkarossen und/oder deren Anbauteilen, mit den folgenden Schritten:
- Positionierung der Werkstücke (2, 26) in eine Beschichtungsposition relativ zu einem Zerstäuber (10, 14, 33),
- Applikation eines Lacks auf die Werkstücke (2, 26) mittels des Zerstäubers (10, 14, 33),
**dadurch gekennzeichnet, dass**
- die zu beschichtenden Werkstücke (2, 26) durch mindestens einen Handhabungsroboter (3, 25) in die Beschichtungsposition relativ zu dem Zerstäuber (10, 14, 33) gebracht werden und die Werkstücke (2, 26) von dem Handhabungsroboter (3,25) während der Beschichtung relativ zu dem Zerstäuber (10, 14, 33) bewegt werden.

2. Verfahren nach Anspruch 1, **dadurch gekennzeichnet, dass** die Werkstücke (2,26) jeweils durch mehrere gemeinsam arbeitende Handhabungsroboter (3, 25) in die Beschichtungspositionen gebracht werden.

3. Verfahren nach einem der vorhergehenden Ansprüche, **dadurch gekennzeichnet, dass** mehrere Werkstücke (2, 26) gemeinsam aufgenommen und in die Beschichtungspositionen gebracht werden.

4. Verfahren nach Anspruch 3, **dadurch gekennzeichnet, dass** die Werkstücke (2, 26) gemeinsam in einer Halteeinrichtung fixiert werden und die Halteeinrichtung mit den darin fixierten Werkstücken (2, 26) von dem Handhabungsroboter (3, 25) gegriffen und positioniert wird.

5. Verfahren nach Anspruch 4, **dadurch gekennzeichnet, dass** die Halteeinrichtung die Werkstücke (2, 26) elektrisch erdet.

6. Verfahren nach einem der vorhergehenden Ansprüche, **dadurch gekennzeichnet, dass** der Zerstäuber (10, 14, 33) entweder ortsfest angeordnet ist oder von einem Applikationsroboter (16) räumlich beweglich geführt wird.

7. Verfahren nach einem dervorhergehenden Ansprüche, **dadurch gekennzeichnet, dass** der Zerstäuber (10, 14, 33) in einer Lackierkabine (1) an der Decke oder der Wand der Lackierkabine (1) oder an einem Halter oder Gestell innerhalb der Lackierkabine (1) angeordnet ist.

8. Verfahren nach einem der vorhergehenden Ansprüche, **dadurch gekennzeichnet, dass** die Werkstücke (2, 26) von mehreren Zerstäubern (10, 14, 33) beschichtet werden.

9. Verfahren nach Anspruch 8, **dadurch gekennzeichnet, dass** die Zerstäuber (10, 14, 33) gleichzeitig Lack applizieren.

10. Verfahren nach Anspruch 8 oder 9, **dadurch gekennzeichnet, dass** der Handhabungsroboter (3, 25) die zu beschichtenden Werkstücke (2, 26) jeweils nacheinander in eine geeignete Beschichtungsposition relativ zu den einzelnen Zerstäubern (10, 14, 33) bringt.

11. Verfahren nach einem der Ansprüche 8 bis 10, **dadurch gekennzeichnet, dass** die Zerstäuber (10, 14, 33) den Lack gleichzeitig applizieren.

12. Verfahren nach einem der Ansprüche 8 bis 10, **dadurch gekennzeichnet, dass** die Zerstäuber (10, 14, 33) den Lack abwechselnd applizieren, wobei einer der Zerstäuber (10, 14, 33) einen Farbwechsel durchführt, während ein anderer der Zerstäuber (10, 14, 33) den Lack appliziert.

13. Verfahren nach einem der Ansprüche 8 bis 12, **dadurch gekennzeichnet, dass** die Zerstäuber (10, 14, 33) unterschiedliche Lacke applizieren und/oder einen unterschiedlichen konstruktiven Aufbau aufweisen.

14. Verfahren nach Anspruch 13, **dadurch gekennzeichnet, dass** einer der Zerstäuber ein Rotationszerstäuber (10) und einer der Zerstäuber ein Luftzerstäuber (14) ist

15. Verfahren nach einem der vorhergehenden Ansprüche, **dadurch gekennzeichnet, dass** in einer Lakkierkabine (1) mehrere oder alle Lackschichten auf die Werkstücke (2, 26) aufgetragen werden.

16. Verfahren nach Anspruch 15, **dadurch gekennzeichnet, dass** die einzelnen Lackschichten sequentiell oder parallel auf die Werkstücke (2,26) aufgetragen werden.

17. Verfahren nach einem der vorhergehenden Ansprüche, **dadurch gekennzeichnet, dass** der Handhabungsroboter (25) die zu beschichtenden Werkstükke (26) in mehreren getrennten Lackierkabinen (27-29) in geeignete Beschichtungspositionen bringt, so dass der Handhabungsroboter (25) mehrere Lackierkabinen (27-29) mit den zu beschichtenden Werkstücken (26) beschickt indem der Handhabungsroboter (25) die Werkstücke (26) in einer der Lackierkabinen (27-29) positioniert.

18. Verfahren nach einem der vorhergehenden Ansprüche, **dadurch gekennzeichnet, dass** in einer Lakkierkabine mindestens zwei Handhabungsroboter angeordnet sind, wobei der eine Handhabungsroboter ein Werkstück in der Beschichtungsposition relativ zu dem Zerstäuber (10, 14, 33) hält, während der andere ein anderes Werkstück aufnimmt oder ablegt.

19. Verfahren nach einem der vorhergehenden Ansprüche, **gekennzeichnet durch** folgende Schritte:
- Zuführung der zu beschichtenden Werkstücke (2) zu einer Lackierkabine (1) mit einer ersten Taktzeit,
- Beschichtung der Werkstücke (2) in der Lakkierkabine (1) mit einer zweiten Taktzeit,
- Weitertransport der Werkstücke (2) aus der Lackierkabine (1) und Weiterbearbeitung mit einer dritten Taktzeit,
- wobei die erste Taktzeit und/oder die dritte Taktzeit kürzer ist als die zweite Taktzeit.

20. Verfahren nach einem der Ansprüche 15 bis 19, **dadurch gekennzeichnet, dass** ein Frischluftstrom in die Lackierkabine (1) eingeleitet wird, wobei die zu beschichtenden Werkstücke (2) in Richtung des Frischluftstroms in die Lackierkabine (1) eingeführt werden.

21. Verfahren nach Anspruch 20, **dadurch gekennzeichnet, dass** der Handhabungsroboter (3) bei einem Farbwechsel entgegen dem Frischluftstrom in einen Frischluftbereich fährt, um dort möglichst schnell wieder mit der Applikation einer neuen Farbe beginnen zu können.

22. Verfahren nach einem der vorhergehenden Ansprüche, **dadurch gekennzeichnet, dass** von dem Handhabungsroboter den zu beschichtenden Werkstücken zu diesem Zweck angeformte oder an ihnen angebrachte Halteelemente ergriffen werden.

23. Verfahren nach Anspruch 22, **dadurch gekennzeichnet, dass** die Halteelemente nach der Beschichtung von dem Werkstück abgetrennt werden.

24. Beschichtungseinrichtung zur Beschichtung von Werkstücken (2, 26), nämlich zur Lackierung von Fahrzeugkarossen und/oder deren Anbauteilen, mit
a) mindestens einem Zerstäuber (10, 14, 33) zur Applikation eines Lacks auf die Werkstücke (2, 26),
b) einer Zuführeinrichtung zur Zuführung der Werkstücke in eine geeignete Beschichtungsposition relativ zu dem Zerstäuber (10, 14, 33), **dadurch gekennzeichnet, dass**
c) die Zuführeinrichtung mindestens einen Handhabungsroboter (3, 25) aufweist, der so Konfiguriert ist, dass er die Werkstücke (2, 26) in die Beschichtungsposition relativzu dem Zerstäuber (10, 14,33) bringt und der die Werkstükke (2, 26) während der Beschichtung relativ zu dem Zerstäuber (10, 14, 33) bewegt.

25. Beschichtungseinrichtung nach Anspruch 24, **dadurch gekennzeichnet, dass** die Zuführeinrichtung mehrere Handhabungsroboter aufweist, die gemeinsam mindestens eines der Werkstücke (2) in die Beschichtungsposition bringen können.

26. Beschichtungseinrichtung nach Anspruch 24, **dadurch gekennzeichnet, dass** der Handhabungsroboter (3, 25) mehrere Werkstücke aufnehmen und gemeinsam in die Beschichtungsposition bringen kann.

27. Beschichtungseinrichtung nach einem der Ansprüche 24 oder 26, **dadurch gekennzeichnet, dass** der Handhabungsroboter (3, 25) eine Haltevorrichtung aufweist, welche die Werkstücke (2, 26) aufnehmen und halten kann.

28. Beschichtungseinrichtung nach Anspruch 27, **dadurch gekennzeichnet, dass** die Haltevorrichtung mindestens eines der folgenden Elemente umfasst:
- Haken,
- Ösen,
- Greifer,
- Saugnäpfe,
- Magneten,
- Klemm-Spreiz-Vorrichtungen.

29. Beschichtungseinrichtung nach einem der Ansprüche 24 bis 28, **dadurch gekennzeichnet, dass** der Zerstäuber (10, 14, 33) ortsfest angeordnet ist.

30. Beschichtungseinrichtung nach einem der Ansprüche 24 bis 29, **dadurch gekennzeichnet, dass** der Zerstäuber (10, 14, 33) in einer Lackierkabine (1) an der Decke der Lackierkabine (1) angeordnet ist.

31. Beschichtungseinrichtung nach einem der Ansprüche 24 bis 30, **dadurch gekennzeichnet, dass** der Zerstäuber (10, 14,33) einen variablen Anstellwinkel aufweist.

32. Beschichtungseinrichtung nach einem der Ansprüche 24 bis 31, **dadurch gekennzeichnet, dass** der Zerstäuber (10, 14, 33) an einem Applikationsroboter (16) oder an einer Parallelkinematik (13) angebracht ist.

33. Beschichtungseinrichtung nach einem der Ansprüche 30 bis 32, **dadurch gekennzeichnet, dass** in der Lackierkabine (1) mehrere Zerstäuber (10, 14) angeordnet sind.

34. Beschichtungseinrichtung nach einem der Ansprüche 24 bis 33, **gekennzeichnet durch** mehrere, räumlich voneinander getrennte Lackierkabinen (1) mit jeweils mindestens einem Zerstäuber (10, 14, 33), wobei der Handhabungsroboter (3, 25) die Werkstücke (2, 26) in den verschiedenen Lackierkabinen (1) in geeigneten Beschichtungspositionen relativ zu den jeweiligen Zerstäubern (10, 14) positionieren kann.

35. Beschichtungseinrichtung nach einem der Ansprüche 24 bis 34, **gekennzeichnet durch** einen Handhabungsroboter mit Parallelkinematik zur mechanischen Führung der Werkstücke.

## Claims

1. Method for coating components (2, 26), namely for painting vehicle body parts and/or their add-on parts, comprising the following steps:
- Positioning the components (2, 26) into a coating position relative to an atomizer (10, 14 33),
- Application of a paint to the components (2, 26) by the atomizer (10, 14, 33),
**characterized in that**
- the components (2, 26) to be coated are brought into the coating position relative to the atomizer (10, 14, 33) by at least one handling robot (3, 25) and the components (2, 26) are moved by the handling robot (3, 25) during the coating relative to the atomizer (10, 14, 33).

2. Method according to claim 1, **characterized in that** the respective components (2, 26) are brought into the coating position by several handling robots (3, 25) working together.

3. Method according to anyone of the preceding claims, **characterized in that** several components (2, 26) are picked up together and are brought into the coating position.

4. Method according to claim 3, **characterized in that** the components (2, 26) are fixed together in a holding means and the holding means along with the components (2, 26) fixed therein is gripped and positioned by the handling robot (3, 25) .

5. Method according to claim 4, **characterized in that** the holding means electrically grounds the components (2, 26).

6. Method according to anyone of the preceding claims, **characterized in that** the atomizer (10, 14, 33) is either fixed in position or is guided movably in space by an application robot (16).

7. Method according to anyone of the preceding claims, **characterized in that** the atomizer (10, 14, 33) is arranged in a paint booth (1) on the ceiling or the wall of the paint booth (1) or on a holder or frame within the paint booth (1).

8. Method according to anyone of the preceding claims, **characterized in that** the components (2, 26) are coated by several atomizers (10, 14, 33).

9. Method according to claim 8, **characterized in that** the atomizers (10, 14, 33) apply paint simultaneously.

10. Method according to claim 8 or 9, **characterized in that** the handling robot (3, 35) brings the components (2, 26) to be coated respectively sequentially into a suitable coating position relative to the individual atomizers (10, 14, 33).

11. Method according to anyone of claims 8 to 10, **characterized in that** the atomizers (10, 14, 33) apply the paint simultaneously.

12. Method according to anyone of the claims 8 to 10, **characterized in that** the atomizers (10, 14, 33) apply the paint alternately, wherein one of the atomizers (10, 14, 33) carries out a colour change, while another of the atomizers (10, 14, 33) applies the paint.

13. Method according to anyone of the claims 8 to 12, **characterized in that** the atomizers (10, 14, 33) apply different paints and/or have a different structural design.

14. Method according to claim 13, **characterized in that** one of the atomizers is a rotary atomizer (10) and another of the atomizers is an air atomizer (14).

15. Method according to anyone of the preceding claims, **characterized in that** several or all paint layers are applied to the components (2, 26) in a paint booth (1).

16. Method according to anyone of the preceding claims, **characterized in that** the individual paint layers are sequentially or in parallel applied to the components (2, 26).

17. Method according to anyone of the preceding claims, **characterized in that** the handling robot (25) brings the components (26) to be coated in several separated paint booths (27-29) into suitable coating positions such that the handling robot (25) charges several paint booths (27-29) with the components (26) to be coated, by positioning the components (26) in one of the paint booths (27-29) by the handling robot (25).

18. Method according to anyone of the preceding claims, **characterized in that** at least two handling robots are located in a paint booth, wherein the one handling robot holds a component in the coating position relative to the atomizer (10, 14, 33), while the other picks up or deposits another component.

19. Method according to anyone of the preceding claims, **characterized by** the following steps:
- Supplying the components (2) to be coated to a paint booth (1) with a first cycle time,
- Coating the components (2) in the paint booth (1) with a second cycle time,
- Further transport of the components (2) from the paint booth (1) and further processing with a third cycle time,
- wherein the first cycle time and/or the third cycle time is shorter than the second cycle time.

20. Method according to anyone of claims 15 to 19 **characterized in that** a flow of fresh air is in introduced into the paint booth (1), wherein the components (2) to be coated are brought into the paint both (1) in the direction of the flow of fresh air.

21. Method according to claim 20, **characterized in that** the handling robot (3) moves into a fresh air region during a colour change against the flow of fresh air in order to begin there with the application of a new colour as quickly as possible.

22. Method according to anyone of the preceding claims, **characterized in that** the handling robot grips holding elements formed on or attached on the components to be coated for that purpose.

23. Method according to claim 22, **characterized in that** the holding elements are separated from the component after coating.

24. Coating device for coating components (2, 26), namely for painting vehicle body parts and/or their add-on parts, comprising
a) at least one atomizer (10, 14, 33) for applying paint to the components (2, 26),
b) a supply means for supplying the components into a suitable coating position relative to the atomizer (10, 14, 33),
**characterized in that**
c) the supply device has at least one handling robot (3, 25) configured to bring the components (2, 26) into the coating position relative to the atomizer (10, 14, 33) and to move the components (2, 26) during the coating relative to the atomizer (10, 14, 33).

25. Coating device according to claim 24, **characterized in that** the supply means has several handling robots, which can bring together at least one of the components (2) into the coating position.

26. Coating device according to claim 24, **characterized in that** the handling robot (3, 25) can pick up several components and can bring the components together into the coating position.

27. Coating device according to claim 24 or 26, **characterized in that** the handling robot (3, 25) has a holding device which can pick up and hold the components (2, 26)

28. Coating device according to claim 27, **characterized in that** the holding device comprises at least one of the following elements:
- hooks,
- eyes,
- grippers,
- suction cups,
- magnets,
- clamping-spreading-devices.

29. Coating device according to anyone of the claims 24 to 28, **characterized in that** the atomizer (10, 14, 33) is arranged fixed in position.

30. Coating device according to anyone of claims 24 to 28, **characterized in that** the atomizer (10, 14, 33) is arranged in a paint booth (1) on the sealing of the paint booth (1).

31. Coating device according to anyone of claims 24 to 30, **characterized in that** the atomizer (10, 14, 33) has a variable adjustment angle.

32. Coating device according to anyone of claims 24 to 31, **characterized in that** the atomizer (10, 14, 33) is arranged on an application robot (16) or on a parallel kinematic (13).

33. Coating device according to anyone of claims 30 to 32, **characterized in that** several atomizers (10, 14) are arranged in the paint booth (1).

34. Coating device according to anyone of claims 24 to 33, **characterized by** several paint booths (1), spatially separated from each other, each having at least one atomizer (10, 14, 33), wherein the handling robot (3, 25) can position the components (2, 26) in the different paint booths (1) into suitable coating positions relating to the respective atomizers (10, 14).

35. Coating device according to anyone of claims 24 to 34, **characterized by** a handling robot with parallel kinematic for mechanical guide of the components.

## Revendications

1. Procédé pour le revêtement de pièces (2, 26), c'est-à-dire pour le laquage de carrosseries de véhicules et/ou de leurs éléments rapportés, comprenant les étapes suivantes :
- positionnement des pièces (2, 26) dans une position de revêtement par rapport à un pulvérisateur (10, 14, 33),
- application d'une laque sur les pièces (2, 26) au moyen du pulvérisateur (10, 14, 33),
**caractérisé en ce que**
- les pièces (2, 26) à revêtir sont amenées par au moins un robot de manipulation (3, 25) dans la position de revêtement par rapport au pulvérisateur (10, 14, 33) et les pièces (2, 26) sont déplacées par le robot de manipulation (3, 25) pendant le revêtement par rapport au pulvérisateur (10, 14, 33).

2. Procédé selon la revendication 1, **caractérisé en ce que** les pièces (2, 26) sont amenées respectivement par plusieurs robots de manipulation (3, 25) travaillant en commun dans les positions de revêtement.

3. Procédé selon l'une quelconque des revendications précédentes, **caractérisé en ce que** plusieurs pièces (2, 26) sont réceptionnées ensemble et amenées dans les positions de revêtement.

4. Procédé selon la revendication 3, **caractérisé en ce que** les pièces (2, 26) sont fixées ensemble dans un dispositif de retenue et le dispositif de retenue est saisi et positionné par le robot de manipulation (3, 25) avec les pièces (2, 26) fixées à l'intérieur.

5. Procédé selon la revendication 4, **caractérisé en ce que** le dispositif de retenue relie électriquement les pièces (2, 26) à la terre.

6. Procédé selon l'une quelconque des revendications précédentes, **caractérisé en ce que** le pulvérisateur (10, 14, 33) est disposé de façon fixe ou est guidé de façon mobile dans l'espace par un robot d'application (16).

7. Procédé selon l'une quelconque des revendications précédentes, **caractérisé en ce que** le pulvérisateur (10, 14, 33) est disposé dans une cabine de laquage (1) sur le plafond ou la paroi de la cabine de laquage (1) ou sur un support ou un bâti à l'intérieur de la cabine de laquage (1).

8. Procédé selon l'une quelconque des revendications précédentes, **caractérisé en ce que** les pièces (2, 26) sont revêtues par plusieurs pulvérisateurs (10, 14, 33).

9. Procédé selon la revendication 8, **caractérisé en ce que** les pulvérisateurs (10, 14, 33) appliquent simultanément de la laque.

10. Procédé selon la revendication 8 ou 9, **caractérisé en ce que** le robot de manipulation (3, 25) amène les pièces (2, 26) à revêtir à chaque fois de façon successive dans une position de revêtement appropriée par rapport aux pulvérisateurs (10, 14, 33) individuels.

11. Procédé selon l'une quelconque des revendications 8 à 10, **caractérisé en ce que** les pulvérisateurs (10, 14, 33) appliquent simultanément la laque.

12. Procédé selon l'une quelconque des revendications 8 à 10, **caractérisé en ce que** les pulvérisateurs (10, 14, 33) appliquent alternativement la laque, l'un des pulvérisateurs (10, 14, 33) effectuant un changement de couleur, pendant qu'un autre des pulvérisateurs (10, 14, 33) applique la laque.

13. Procédé selon l'une quelconque des revendications 8 à 12, **caractérisé en ce que** les pulvérisateurs (10, 14, 33) appliquent différentes laques et/ou présentent une structure de construction différente.

14. Procédé selon la revendication 13, **caractérisé en ce que** l'un des pulvérisateurs est un pulvérisateur à rotation (10) et l'un des pulvérisateurs un pulvérisateur à air (14).

15. Procédé selon l'une quelconque des revendications précédentes, **caractérisé en ce que** plusieurs ou toutes les couches de laque sont appliquées sur les pièces (2, 26) dans une cabine de laquage (1).

16. Procédé selon la revendication 15, **caractérisé en ce que** les couches de laque individuelles sont appliquées de façon séquentielle ou parallèlement sur les pièces (2, 26).

17. Procédé selon l'une quelconque des revendications précédentes, **caractérisé en ce que** le robot de manipulation (25) amène les pièces (26) à revêtir dans plusieurs cabines de laquage (27-29) séparées dans des positions de revêtement appropriées, de sorte que le robot de manipulation (25) alimente plusieurs cabines de laquage (27-29) avec les pièces (26) à revêtir, du fait que le robot de manipulation (25) positionne les pièces (26) dans l'une des cabines de laquage (27-29).

18. Procédé selon l'une quelconque des revendications précédentes, **caractérisé en ce qu'**au moins deux robots de manipulation sont disposés dans une cabine de laquage, l'un des robots de manipulation maintenant une pièce dans la position de revêtement par rapport au pulvérisateur (10, 14, 33), tandis que l'autre reçoit ou dépose une autre pièce.

19. Procédé selon l'une quelconque des revendications précédentes, **caractérisé par** les étapes suivantes :
- arrivée des pièces (2) à revêtir à une cabine de laquage (1) avec un premier temps de cycle,
- revêtement des pièces (2) dans la cabine de laquage (1) avec un second temps de cycle,
- acheminement des pièces (2) provenant de la cabine de laquage (1) et retraitement avec un troisième temps de cycle,
- le premier temps de cycle et/ou le troisième temps de cycle étant plus courts que le deuxième temps de cycle.

20. Procédé selon l'une quelconque des revendications 15 à 19, **caractérisé en ce qu'**un flux d'air frais est introduit dans la cabine de laquage (1), les pièces (2) à revêtir étant introduites en direction du flux d'air frais dans la cabine de laquage (1).

21. Procédé selon la revendication 20, **caractérisé en ce que** le robot de manipulation (3) se déplace dans une zone d'air frais dans le cas d'un changement de couleur dans le sens contraire au flux d'air frais, afin de pouvoir commencer à cet endroit le plus vite possible à nouveau l'application d'une nouvelle couleur.

22. Procédé selon l'une quelconque des revendications précédentes, **caractérisé en ce que** le robot de manipulation saisit des éléments de retenue formés à cet effet sur les pièces à revêtir ou placés sur ces pièces.

23. Procédé selon la revendication 22, **caractérisé en ce que** les éléments de retenue sont séparés de la pièce après le revêtement.

24. Dispositif de revêtement pour le revêtement de pièces (2, 26), c'est-à-dire pour le laquage de carrosseries de véhicules et/ou de leurs parties rapportées, comprenant
a) au moins un pulvérisateur (10, 14, 33) pour l'application d'une laque sur les pièces (2, 26),
b) un dispositif d'amenée pour l'amenée des pièces dans une position de revêtement appropriée par rapport au pulvérisateur (10, 14, 33),
**caractérisé en ce que**
c) le dispositif d'amenée présente au moins un robot de manipulation (3, 25), qui est configuré de telle sorte qu'il amène les pièces (2, 26) dans la position de revêtement par rapport au pulvérisateur (10, 14, 33) et qu'il déplace les pièces (2, 26) pendant le revêtement par rapport au pulvérisateur (10, 14, 33).

25. Dispositif de revêtement selon la revendication 24, **caractérisé en ce que** le dispositif d'amenée présente plusieurs robots de manipulation, qui peuvent amener ensemble au moins l'une des pièces (2) dans la position de revêtement.

26. Dispositif de revêtement selon la revendication 24, **caractérisé en ce que** le robot de manipulation (3, 25) peut recevoir plusieurs pièces et les amener conjointement dans la position de revêtement.

27. Dispositif de revêtement selon l'une quelconque des revendications 24 ou 26, **caractérisé en ce que** le robot de manipulation (3, 25) présente un dispositif de retenue, qui peut recevoir et maintenir les pièces (2, 26).

28. Dispositif de revêtement selon la revendication 27, **caractérisé en ce que** le dispositif de retenue comprend au moins l'un des éléments suivants :
- crochets,
- anneaux,
- pinces,
- ventouses,
- aimants,
- dispositifs de serrage et d'écartement.

29. Dispositif de revêtement selon l'une quelconque des revendications 24 à 28, **caractérisé en ce que** le pulvérisateur (10, 14, 33) est disposé de façon fixe.

30. Dispositif de revêtement selon l'une quelconque des revendications 24 à 29, **caractérisé en ce que** le pulvérisateur (10, 14, 33) est disposé dans une cabine de laquage (1) sur le plafond de la cabine de laquage (1).

31. Dispositif de revêtement selon l'une quelconque des revendications 24 à 30, **caractérisé en ce que** le pulvérisateur (10, 14, 33) présente un angle d'attaque variable.

32. Dispositif de revêtement selon l'une quelconque des revendications 24 à 31, **caractérisé en ce que** le pulvérisateur (10, 14, 33) est placé sur un robot d'application (16) ou sur une cinématique parallèle (13).

33. Dispositif de revêtement selon l'une quelconque des revendications 30 à 32, **caractérisé en ce que** plusieurs pulvérisateurs (10, 14) sont disposés dans la cabine de laquage (1).

34. Dispositif de revêtement selon l'une quelconque des revendications 24 à 33, **caractérisé par** plusieurs cabines de laquage (1) séparées les unes des autres dans l'espace comprenant chacune au moins un pulvérisateur (10, 14, 33), le robot de manipulation (3, 25) pouvant positionner les pièces (2, 26) dans les différentes cabines de laquage (1) dans des positions de revêtement appropriées par rapport aux pulvérisateurs (10, 14) respectifs.

35. Dispositif de revêtement selon l'une quelconque des revendications 24 à 34, **caractérisé par** un robot de manipulation avec cinématique parallèle pour le guidage mécanique des pièces.
